# FASCICULE DE BREVET EUROPEEN

(11) **EP 0 302 957 B1**
(45) Date de publication et mention de la délivrance du brevet: **27.01.1993**
(21) Numéro de dépôt: 87111683.6
(22) Date de dépôt: 12.08.1987
(51) Int. Cl.: H04M 3/50, H04M 11/02

(54) **Dispositif de signalisation de message pour installation téléphonique à postes analogiques**
Anordnung zur Berichtsmeldung in einem Fernsprechsystem
Device for signalling a message in a telephone system

(43) Date de publication de la demande: 15.02.1989
(73) Titulaire: ALCATEL BUSINESS SYSTEMS, F-75008 Paris (FR)
(72) Inventeur: Guyader, Roger, F-29215 Guipavas (FR); Ploet, Jean-Marie, F-29213 Plougastel Daoulas (FR)
(74) Mandataire: Weinmiller, Jürgen

(56) Documents cités:
- NL-A- 8 600 149
- US-A- 4 140 882

## Description

La présente invention concerne un dispositif de signalisation de message notamment par voie lumineuse pour installation téléphonique dont les utilisateurs sont dotés de postes analogiques,

A titre de possibilité supplémentaire d'exploitation au profit des utilisateurs, les installations téléphoniques privées tendent à comporter des postes téléphoniques dotés de lampes, dites de message, qui permettent de signaler à l'utilisateur d'un poste qu'un message a été reçu pour lui, une telle exploitation étant demandée par exemple dans les installations téléphoniques d'hôtel.

Une première solution, classique avec les installations téléphoniques dont les postes sont de type analogique, consiste à utiliser des lignes qui comportent un fil supplémentaire assurant l'allumage d'une lampe de message. Toutefois une telle solution augmente le coût dans le cas d'installations nouvelles et nécessite une reprise du câblage de raccordement des installations existantes.

Une seconde solution classique consiste à faire générer un signal de fréquence particulière par un équipement central de l'installation et à envoyer ce signal aux postes concernés. Toutefois là encore, la solution choisie est relativement onéreuse.

Une troisième solution est fournie dans le document US-A-4 140 882 où il est prévu que le générateur de sonnerie d'un autocommutateur produise des signaux d'allumage pour des indicateurs lumineux de message que comportent les postes desservis par l'autocommutateur.

Ces signaux se différencient de ceux de sonnerie fournis par ce générateur par leur tension plus faible, insuffisante pour actionner les sonneries des postes.

Un dispositif de signalisation lumineuse pour poste est décrit dans le document NL-A-8600149, ce dispositif comporte un condensateur chargé au travers d'un circuit de charge à forte impédance par une tension continue positive et déchargé au travers d'une diode électroluminescente de signalisation, lorsque la tension atteint une tension de seuil où un transistor de commutation est rendu passant

L'invention propose un dispositif simple à mettre en oeuvre, efficace et peu coûteux de signalisation de message pour installation téléphonique organisée autour d'un équipement central de rattachement auquel des postes téléphoniques sont raccordés par l'intermédiaire de lignes comportant chacune au moins deux fils, dits de conversation, qui, raccordés à un poste, assurent notamment la téléalimentation du poste, via un pont redresseur à diodes, la transmission des signaux à fréquences vocales transitant sous forme analogique par ce poste et l'envoi de signaux cadencés d'appel, alternant des phases de silence avec des phases d'émission d'un signal basse fréquence déterminé, cet envoi étant assuré par un générateur d'appel de l'équipement central et vers un récepteur d'appel du poste, ledit dispositif comportant, dans chacun des postes concernés, des moyens de signalisation de message qui incluent en parallèle, d'une part une lampe en série avec une résistance et d'autre part un condensateur.

Selon une caractéristique de l'invention, le condensateur et la lampe, en série avec une résistance, de chaque poste sont directement reliés aux sorties du pont redresseur de ce poste et l'équipement central comporte des moyens pour commander l'envoi, par le générateur d'appel, de signaux cadencés dont la phase cyclique d'émission, plus courte que celle des signaux cadencés d'appel, est suffisante pour allumer la lampe tout en étant trop courte pour actionner le récepteur d'appel.

L'invention, ses caractéristiques et ses avantages sont précisés dans la description qui suit, en liaison avec la figure unique.

Cette figure unique présente schématiquement un exemple de dispositif de signalisation pour installation téléphonique organisée autour d'un équipement central.

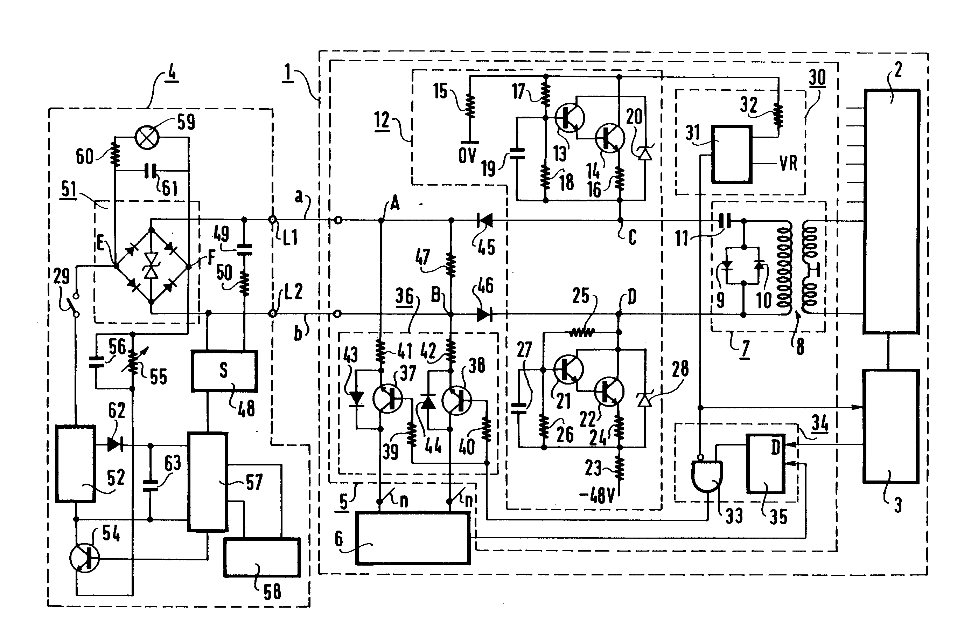

L'équipement central de rattachement pour installation téléphonique présenté figure 1 est par exemple constitué par un autocommutateur ou encore par un boîtier central d'une installation d'intercommunication.

Cet équipement central 1 comporte essentiellement un réseau de connexion 2, qui est piloté par une unité de commande 3, organisé par exemple autour d'un processeur usuel non représenté.

Le réseau de connexion 2 permet de relier entre eux des postes téléphoniques qui sont raccordés à lui par l'intermédiaire de circuits individuels d'abonné servant d'interfaces d'adaptation.

Chaque poste téléphonique, tel le poste 4 sur la figure 1, est relié à son circuit d'abonné 5 par une ligne téléphonique ne nécessitant que deux fils "a, b" qui sont ceux classiquement dits de conversation.

Dans les postes téléphoniques reliés à leurs équipements d'abonné respectifs par une ligne à deux fils, ces derniers assurent le transfert bidirectionnel, sous forme analogique basse fréquence ou par changement d'état, de l'ensemble des signaux transitant du poste téléphonique à l'équipement central auxquels ces fils sont connectés.

Bien que l'invention décrite ci-dessous soit présentée en liaison avec un poste téléphonique 4 à deux fils "a, b", il doit être précisé qu'elle est également applicable à tout poste ou terminal comportant des fils supplémentaires, tels par exemple un poste à fil supplémentaire de terre, ou à un poste ou terminal à deux lignes téléphoniques.

Dans la mesure où l'invention concerne essentiellement les postes et les circuits d'abonnés aux quels ils sont reliés, les structures du réseau de connexion 2, de l'unité de commande 3 et des équipements auxiliaires indispensables au fonctionnement de l'équipement centralisé 1, qui sont connues, ne seront pas rappelées. Exception sera faite toutefois pour l'équipement auxiliaire que constitue une machine d'appel, cette machine, ici référencée 6, étant reliée aux circuits d'abonnés 5 pour leur fournir une signalisation alternative très basse fréquence, par exemple vingt-cinq hertz, à tension relativement élevée, par exemple quatre-vingt volts efficaces, dite de sonnerie, servant à avertir les utilisateurs des postes des appels qui leur sont destinés.

Dans l'exemple proposé, la machine d'appel 6 est un générateur alternatif statique usuel aux bornes duquel sont reliés en parallèle les circuits d'abonné 5 de l'équipement central, seul l'un de ces circuits étant présenté figure 1.

Chaque circuit d'abonné 5 est classiquement relié, d'une part aux fils de conversation "a, b" du poste 4 qu'il dessert, via les bornes de raccordement L1, L2 de ce poste, d'autre part à un accès individuel du réseau de commutation 2 par deux fils aboutissant à un translateur 7.

Le translateur 7 est classiquement constitué autour d'un transformateur 8 connecté d'une part aux deux fils d'accès au réseau de connexion, via un premier enroulement à point milieu à la masse, d'autre part aux deux fils de conversation "a, b", via un second enroulement entre les bornes duquel sont classiquement montées têtes-bêches deux diodes anti-surtension 9, 10.

Un condensateur 11 placé sur le fil "a" bloque toute composante continue éventuelle au niveau du translateur.

Un alimenteur 12 assure classiquement la mise sous tension des fils de conversation "a, b" à des potentiels différents, par exemple zéro volt pour le premier et moins quarante-huit volts pour le second, de manière à permettre la détection de la fermeture de la boucle qui relie les fils a et b à l'intérieur du poste, lorsque ce dernier est en fonctionnement.

L'alimenteur 12 est ici composé de deux parties, l'une relie le fil "a" au potentiel zéro volt par l'intermédiaire d'un montage Darlington à deux transistors 13, 14, de type NPN, en cascade. Ces transistors sont reliés au potentiel zéro volt par leurs collecteurs, via une résistance 15, et au fil "a", via une résistance 16 reliée à I'émetteur du transistor 14 placé en aval du montage. La base du transistor 13 placé en amont est connectée au point commun entre deux résistances 17 et 18 formant un pont diviseur relié d'une part au fil "a", d'autre part au potentiel zéro volt, via la résistance 15. Un condensateur 19 placé aux bornes de la résistance 18 et une diode Zener 20, placée entre le collecteur du transistor d'aval 14 et le fil "a", complètent la partie de montage reliée au potentiel zéro volt. La seconde partie de l'alimenteur 12 relie le fil "b" au potentiel -48 volts. Cette seconde partie est composée de manière identique à la première par un montage Darlington à deux transistors 21, 22 en cascade qui correspondent aux transistors 13, 14, quatre résistances 23, 24, 25 et 26 un condensateur 27 et une diode Zener 28 jouent respectivement le même rôle que les résistances 15, 16, 17, 18 le condensateur 19 et la diode Zener 20.

L'alimenteur 12 ainsi constitué alimente la ligne en courant continu sous quarante-huit volts au travers de deux résistances de valeur apparente trois cent ohms, il présente une haute impédance vis-à-vis des signaux à fréquence vocale pour ne pas affaiblir ceux-ci lors de leur transmission.

L'alimentation permanente de la ligne formée par les fils a, b permet la détection des ouvertures et fermeture de boucle au niveau du poste téléphonique 4 comme indiqué plus haut.

L'ouverture et la fermeture de boucle sont classiquement occasionnées par l'intermédiaire d'un contact 29, dit de crochet commutateur, qui est commandé par l'appui ou le soulèvement du combiné, non figuré ici, du poste 4, lors de l'utilisation de ce poste.

Selon un processus classique, la fermeture de boucle est détectée par un détecteur, dit de boucle, 30 du circuit d'abonné.

Ce détecteur de boucle 30 est, par exemple, constitué par un comparateur 31 relié par ses entrées, d'une part à un potentiel de référence VR par une première entrée, d'autre part à l'alimenteur 12 par une seconde entrée, via une résistance 32.

La résistance 32 est ici connectée au point commun à la résistance 15 à la résistance 17 et aux collecteurs des transistors 13, 14. La sortie du comparateur 31 signale sous forme binaire toute fourniture significative de courant dans l'alimenteur, soit ici le passage d'un courant supérieur à huit milliampères.

Le signal de sortie du comparateur 31 est fourni, d'une part à l'unité de commande 3 de l'équipement central, d'autre part à une entrée inversée d'une porte 33, de type ET, d'un circuit de commande d'injection de sonnerie 34 que cette signalisation bloque de manière à interdire l'envoi d'un courant de sonnerie au poste 4 lorsque ce dernier est en communication, c'est-à-dire lorsque sa boucle est fermée.

Par contre l'envoi d'un courant de sonnerie est possible, sur la commande de l'unité centrale 3 et à la demande d'un autre poste, lorsque le détecteur de boucle 30 indique que la boucle est ouverte en ne bloquant pas la porte 33. Le circuit de commande d'injection 34 comporte à cet effet une bascule bistable 35 attaquant la seconde entrée de la porte 33 et recevant, d'une part les ordres de déclenchement et de fin de sonnerie émanant de l'unité de commande 3, via une liaison aboutissant à l'entrée de données D, d'autre part une indication des instants où la tension de sonnerie est la plus faible pour faire coïncider les commandes émises par le circuit de commande d'injection 34 avec ces instants.

Un circuit d'injection 36 du circuit d'abonné 5 reçoit les commandes fournies sous forme binaire par la porte 33.

Ce circuit d'injection 36 comporte ici deux transistors de commutation 37 et 38 le premier de type NPN, l'autre de type PNP, qui sont reliés le premier par son collecteur, l'autre par son émetteur aux bornes de la machine d'appel 6 qui leur applique de manière permanente les signaux alternatifs basse fréquence de sonnerie, polarisés ici à quarante huit volts.

Les bases des transistors 37 et 38 sont reliées à la sortie de la porte 33, via deux résistances 39, 40 pour une commutation simultanée de ces transistors.

Les signaux alternatifs de sonnerie sont transmis aux fils a et b par l'intermédiaire de deux résistances 41, 42 montées la première entre le fil b et l'émetteur du transistor 37, l'autre entre le fil a et le collecteur du transistor 38. Deux diodes 43, 44 sont montées en parallèle chacune à la liaison émetteur-collecteur d'un des transistors 37, 38 en vue de les protéger ; deux diodes 45, 46 sont placées chacune sur un fil de ligne entre les points A, B où est connecté le circuit d'injection 36 et les points C, D ou est connecté l'alimenteur 12 de manière à empêcher l'apparition de tensions importantes aux bornes de ce dernier, lors des phases d'injection.

Le courant de sonnerie, fourni par le circuit d'abonné 5 au poste 4, est normalement reçu par un récepteur d'appel 48 relié aux fils de ligne a, b. Ce récepteur d'appel 48, est par exemple une classique sonnerie ou un circuit électronique ayant même fonction ; il est relié d'une part, via un condensateur 49 et une résistance 50, au fil a, d'autre part directement au fil b, en parallèle avec un pont redresseur à diodes 51 assurant la téléalimentation du poste 4 et la transmission bidirectionnelle des signaux de conversation vers et à partir d'un classique circuit de transmission téléphonique 52.

Le circuit de transmission téléphonique 52 dessert classiquement au moins un microphone et un écouteur ou un haut-parleur non figurés, il est relié aux sorties E, F de la diagonale alimentée du pont 51, d'une part par un contact de crochet commutateur 53 signalant la mise en service du poste par décrochage du combiné ou équivalent, d'autre part par un transistor de commutation 54, ici de type NPN, en série avec un circuit de réglage à résistance modifiable 55 et condensateur 56 en parallèle.

Le transistor de commutation 54 est ici commandé, via sa base, par un circuit de numérotation 57 chargé d'assurer les ouvertures et fermetures de boucle correspondant aux chiffres tabulés sur un clavier 58, le circuit de numérotation et le clavier étant alimentés par le pont redresseur 51, via le circuit de transmission 52.

Selon l'invention on associe simplement une lampe de message 59 à un décodeur, formé en parallèle d'une résistance 60 en série avec la lampe de message et d'un condensateur 61, l'ensemble est relié aux sorties (E, F) du pont redresseur 51.

Dans une forme de réalisation choisie la résistance 60 et le condensateur 61 ont par exemple des valeurs respectives de 47 kilo ohms et de 22 microfarads alors que la résistance 50 et le condensateur 49 ont des valeurs respectives de 330 ohms et 2,2 microfarads, la lampe étant un voyant néon de 60 volts.

La signalisation de la présence d'un message en attente à un poste tel que 4, consiste à faire émettre par le circuit d'injection des signaux de sonnerie trop courts pour déclencher le circuit récepteur d'appel 48 du poste, mais suffisants pour allumer la lampe de message et charger le condensateur (61) dont la décharge lente maintient la lampe allumée pendant les phases de silence en cours d'injection de signaux de message. Si par exemple les signaux de sonnerie correspondent à une injection cyclique de 1500 millisecondes suivie d'une phase de silence de 3500 millisecondes, les signaux de message correspondent par exemple à une injection cyclique de 64 millisecondes suivie d'une phase de silence d'une seconde.

La commande d'allumage de la lampe de message 59 peut s'effectuer par tout moyen permettant de fournir un ordre en ce sens sous forme binaire codée à l'unité de commande 3 programmée pour la réaliser. Cet ordre qui comprend une commande et une indication du poste concerné, peut être envoyé par divers moyens, par exemple à partir d'un poste d'opératrice dans le cas d'un autocommutateur ou encore à partir d'un poste à écran et clavier ou même d'un simple poste téléphonique à touches, prévu à cet effet.

L'unité de commande 3 pilote le circuit d'injection 36 de manière semblable pour l'envoi d'une sonnerie d'appel ou d'une indication de message, la différence essentielle étant la durée d'injection que fixe l'unité de commande 3, grâce à un compteur interne cycliquement relancé pour la durée d'émission du message. La commande d'extinction d'une lampe de message 59 s'obtient par un processus analogue à celui décrit pour l'allumage.

Bien entendu la présence d'une lampe de message allumée ne perturbe nullement le fonctionnement habituel du poste. En particulier le décrochage du combiné d'un poste, dont la lampe de message est allumée, supprime cet allumage pour au moins la durée de ce décrochage, sous l'action du détecteur de boucle 30 qui inhibe le circuit d'injection 36 via la porte 33, de même façon que si le poste était sonné.

En variante on peut également faire une signalisation sonore de message par le procédé évoqué ci-dessus avec un poste téléphonique classique à sonnerie, le signal de message cadencé appliqué aux fils de conversation permettant de faire faiblement tinter la sonnerie sans déclencher une réelle signalisation d'appel.

## Revendications

1. Dispositif de signalisation de message pour installation téléphonique organisée autour d'un équipement central de rattachement (1) auquel sont raccordés des postes téléphoniques (4) par l'intermédiaire de lignes comportant chacune au moins deux fils, dits de conversation, (a, b) qui, raccordés à un poste, assurent notamment la téléalimentation du poste via un pont redresseur à diodes (51), ainsi que la transmission des signaux à fréquences vocales transitant sous forme analogique par ce poste et l'envoi de signaux cadencés d'appel, alternant des phases de silence avec des phases d'émission d'un signal basse fréquence déterminé, par un générateur d'appel (6, 36) de l'équipement central vers un récepteur d'appel (48) du poste, ledit dispositif comportant, d'une part, dans chacun des postes (4) concernés, des moyens de signalisation de message qui incluent en parallèle, d'une part une lampe (59) en série avec une résistance (60) et d'autre part un condensateur (61) caractérisé en ce que dans chaque poste le condensateur et la lampe en série avec une résistance sont directement reliés aux sorties (E, F) du pont redresseur (51) et en ce qu'il est prévu dans l'équipement central, des moyens pour commander l'envoi par le générateur d'appel de signaux cadencés dont la phase cyclique d'émission, plus courte que celle des signaux cadencés d'appel, est suffisante pour allumer la lampe tout en étant trop courte pour actionner le récepteur d'appel.

2. Dispositif de signalisation selon la revendication 1, pour installation téléphonique dans lequel l'équipement central (1) comporte un injecteur de sonnerie (36) par poste téléphonique, qui est relié aux fils de conversation de la ligne desservant ledit poste, qui est alimenté en signaux cadencés d'appel par une machine d'appel (6) commune de l'équipement central, et qui est controlé sélectivement en émission par l'unité de commande (3), via un circuit de commande d'injection (34), ledit dispositif étant caractérisé en ce que l'émission des signaux cadencés de message pour un poste est commandée par l'unité de commande (3) de l'équipement central, via le circuit de commande d'injection (34) desservant le poste concerné, ledit circuit de commande d'injection recevant des commandes cycliques d'émission dont la durée individuelle est plus courte que celle des signaux de sonnerie.

3. Dispositif de signalisation de message pour installation téléphonique organisée autour d'un équipement central de rattachement (1) auquel sont raccordés des postes téléphoniques (4) par l'intermédiaire de lignes comportant chacune au moins deux fils, dits de conversation, (a, b) qui, raccordés à un poste, assurent notamment la transmission des signaux à fréquences vocales transitant sous forme analogique par ce poste et l'envoi de signaux cadencés d'appel, alternant des phases de silence avec des phases d'émission d'un signal basse fréquence déterminé, par un générateur d'appel (6, 36) de l'équipement central vers un récepteur d'appel (48) de type sonnerie du poste, ledit dispositif étant caractérisé en ce qu'il comporte des moyens pour commander l'envoi par le générateur d'appel de signaux cadencés dont la phase cyclique d'émission, plus courte que celle des signaux cadencés d'appel, est suffisante pour faire tinter la sonnerie, tout en étant trop courte pour produire une signalisation d'appel.

## Claims

1. A message signalling device for a telephone installation organized around a telephone exchange (1) to which telephone stations (4) are connected via lines each comprising at least two wires, referred to as conversation wires (a, b) which, when connected to a station, ensure particularly the remote power supply of the station via a diode rectifier bridge (51), as well as the transmission of speech frequency signals transiting in analog form through this station, and the sending of clocked call signals, including alternating phases of silence with phases of transmission of a predetermined low frequency signal, by a ring generator (6, 36) of the telephone exchange towards a call receiver (48) of the station, said message device comprising on the one hand, in each of the respective stations (4), message signalling means which include, in parallel, on the other hand, a lamp (59) mounted in series with a resistor (60) and, on the other hand, a capacitor (61), characterized in that the capacitor and the lamp mounted in series with a resistor of each stations are directly connected to the outputs (E, F) of the rectifier bridge (51), and in that means are provided in the telephone exchange for commanding the sending by the ring generator of clocked signals, whose cyclic transmission phase is shorter than that of the clocked calling signals, is long enough to light the lamp while being too short to actuate the call receiver.

2. A message signalling device according to claim 1, for a telephone installation in which the telephone exchange (1) comprises a ring injector (36) per telephone station, which is connected to the conversation wires of the line serving said station, which is fed with clocked ringing signals by a common ringing machine (6) of the telephone exchange, and which is controlled selectively in transmission by the control unit (3) via a ringer current injection command circuit (34), said device being characterized in that the transmission of the clocked message signals for a station is controlled by the control unit (3) of the telephone exchange, via the injection command circuit (34) serving the station concerned, said injection command circuit receiving cyclic transmission commands whose individual duration is shorter than that of the ringing signals.

3. A message signaling device for a telephone installation organized around a telephone exchange (1) to which telephone stations (4) are connected via lines each comprising at least two wires, referred to as conversation wires (a, b) which, when connected to a station, ensure particularly the remote power supply of the station via a diode rectifier bridge (51), as well as the transmission of speech frequency signals transiting in analog form through this station, and the sending of clocked call signals including alternating phases of silence with phases of transmission of a predetermined low frequency signal, by a ring generator (6, 36) of the telephone exchange towards a call receiver (48) of the station ringer type, said message device being characterized in that it comprises means for commanding the sending by the ring generator of clocked signals, whose cyclic transmission phase is shorter than that of the clocked calling signals, but is long enough for causing the ringer to tinkle, while being too short to produce a call signalling.

## Patentansprüche

1. Einrichtung zum Melden einer Nachricht für eine Telefonanlage, die mit einer Vermitttlungszentrale (1) versehen ist, an die Telefongerbte (4) über Leitungen angeschlossen sind, von denen jede mindestens zwei Drähte (a, b), Sprechadern genannt, aufweist, die vor allem die Fernspeisung des angeschlossenen Apparates über eine Diodengleichrichterbrücke (51) sowie die Übertragung von Sprachfrequenzsignalen, die in Analogform übertragen werden, und die Übermittlung von getakteten Rufsignalen durch einen Rufsignalgenerator (6, 36) der Vermittlungszentrale an einen Rufsignalempfänger (48) des Apparates durchführen, wobei signallose Phasen mit Sendephasen eines bestimmten Niederfrequenzsignals abwechseln, und wobei die Meldeeinrichtung in jedem betroffenen Apparat (4) Nachrichtenanzeigemittel aufweist, die in Parallelschaltung zum einen eine in Reihe mit einem Widerstand (60) geschaltete Leuchte (59) und zum anderen einen Kondensator (61) enthalten, dadurch gekennzeichnet, daß der Kondensator und die Leuchte in Reihe mit einem Widerstand direkt mit den Ausgängen (E, F) der Gleichrichterbrücke (51) dieses Apparates angeschlossen sind und daß in der Vermittlungszentrale Mittel zur Steuerung der Übermittlung von getakteten Signalen durch den Rufsignalgenerator vorgesehen sind, deren zyklische Sendephase, die kürzer als diejenige der getakteten Rufsignale ist, ausreicht, um die Leuchte einzuschalten, aber zu kurz ist, um den Rufsignalempfänger zu betätigen.

2. Meldeeinrichtung nach Anspruch 1 für eine Telefonanlage, bei der die Vermittlungszentrale (1) ein Klingelsignaleinspeiseglied (36) je Telefonapparat umfaßt, das an die Sprechadern der Leitung angeschlossen ist, die den genannten Apparat bedient, der seinerseits von einer zur Vermittlungszentrale gehörenden Rufsignalmaschine (6) mit getakteten Anrufsignalen gespeist wird, und der über eine Einspeisesteuerschaltung (34) sendeseitig selektiv durch die Steuereinheit (3) gesteuert wird, dadurch gekennzeichnet, daß das Senden von getakteten Meldesignalen für einen Apparat durch die Steuereinheit (3) der Vermittlungszentrale über die Einspeisesteuerschaltung (34) gesteuert wird, die den betreffenden Apparat bedient, wobei die Einspeisesteuerschaltung zyklische Sendebefehle empfängt, deren individuelle Dauer kürzer als diejenige der Klingelsignale ist.

3. Einrichtung zum Melden einer Nachricht für eine Telefonanlage, die eine Vermittlungszentrale (1) aufweist, an die Telefongeräte (4) über Leitungen angeschlossen sind, die je mindestens zwei Drähte, Sprechadern (a, b) genannt, aufweisen, die an einen Apparat angeschlossen vor allem die Übertragung von Sprachfrequenzsignalen in Analogform und die Übermittlung von getakteten Rufsignalen durch einen Rufsignalgenerator (6, 36) der Vermittlungszentrale an einen Rufsignalempfänger (48) vom Typ des Apparateklingelwerks durchführen, dadurch gekennzeichnet, daß Mittel zur Steuerung der Übermittlung von getakteten Signalen durch den Rufsignalgenerator vorgesehen sind, deren zyklische Sendephase Signale, die kürzer als diejenige der getakteten Rufsignale ist, ausreicht, um das Klingelwerk leicht anklingen zu lassen, aber zu kurz ist, um eine Rufmeldung zu erzeugen.
